# EUROPEAN PATENT SPECIFICATION

(11) **EP 2 892 406 B1**
(45) Date of publication and mention of the grant of the patent: **11.10.2017**
(21) Application number: 13785616.7
(22) Date of filing: 26.08.2013
(51) Int. Cl.: A47J 43/07

(54) **BEAKER FOR A BLENDER EQUIPPED WITH A BLENDER BAR**
BECHER FÜR EINEN MIXER MIT EINER MIXERSTANGE
GOBELET POUR UN MÉLANGEUR ÉQUIPÉ D'UNE BARRE DE MÉLANGEUR

(30) Priority: 03.09.2012 WO PCT/CN2012/080921
(43) Date of publication of application: 15.07.2015
(73) Proprietor: Koninklijke Philips N.V., 5656 AE Eindhoven (NL)
(72) Inventor: CARTEI, Mirko, 5656 AE Eindhoven (NL)
(74) Representative: Uittenbroek, Arie Leendert
(86) International application number: PCT/IB2013/056878
(87) International publication number: WO 2014/033607

(56) References cited:
- WO-A1-02/00078
- US-A- 6 086 240
- US-A1- 2007 187 421

## Description

### FIELD OF THE INVENTION

The invention relates to beaker for a blender equipped with a blender bar.

The invention may be used in the field of kitchen appliances, in particular hand-blenders.

### BACKGROUND OF THE INVENTION

Products designed for mixing or blending foodstuffs into liquid is known, both as tabletop products known as blenders and as handheld products, known as hand-blenders or bar-blenders.

Those products are used, for example, for making fruit drinks from fruits, milk and ice put into a beaker (also called jug, jar, container), then blending all ingredients until the result is a smooth liquid. Instead of fruits, vegetable can be used to prepare soups.

A hand-blender consists of a hand-unit equipped with a detachable blender bar comprising a rotating blade at the end. The blender bar consists of a cylindrical tube and a protective cage at the lower end forming a protection around the rotating blade. The shape of the cage is usually dress-shaped, for example having the shape of a half-sphere, with the blade rotating freely inside. The bottom edge of the cage is dimensioned so that when held by users against the bottom part of the beaker, there is a certain free gap between the beaker and the blade. The cage may comprise holes, cut-outs in order to encourage a certain flow of liquid and ingredients enter inside the cage and pass the blade area in order to product a better blending result.

A hand-blender comes along with a beaker which is used as accessory for receiving ingredients to be blended. A beaker has a certain diameter and height to enhance blending performance, prevent splashing and enable convenient pouring of blended ingredients. Known beakers for hand-blender have typically a flat bottom surface or a spherically-shaped bottom surface. Document WO 02/00078 A1 (see Fig. 4) discloses a beaker for a blender equipped with a blender bar equipped with a rotation bar connecting to a blade covered by a cage, said beaker comprising a bottom surface, a side wall extending upwardly along a vertical axis from said bottom surface, said side wall forming an opening at its upper part for receiving said blender bar. A problem with those known beakers is linked to a phenomenon known as suction force. This suction force is caused by the flow of ingredients entering the cage of the blender bar, which creates a pressure difference between the inside and outside of the cage during blending. This causes the blender bar to adhere strongly to the bottom surface of the beaker during blending. This phenomenon tends to attract the blender bar towards the bottom surface of the beaker, similarly as a strong magnet. This phenomenon is a nuisance for users, and results in deteriorating the blending efficiency because ingredients cannot continuously enter the cage.

This problem can only be partially overcome by a design modification of the cage, for example by adding holes or cut-outs. However, such solutions are not satisfactory in the sense that the suction force still exits, which still affect the blending efficiency.

### OBJECT AND SUMMARY OF THE INVENTION

It is an object of the invention to propose an improved beaker for a blender equipped with a blender bar. The invention is defined by the independent claim. The dependent claims define advantageous embodiments.

To this end, the beaker according to the invention comprises a bottom surface, a side wall extending upwardly along a vertical axis from said bottom surface, said side wall forming an opening at its upper part for receiving said blender bar. The bottom surface is defined as a portion of a surface generated by the translation of a two-dimensional non-flat pattern along an axis perpendicular to said vertical axis.

By defining the bottom surface of the beaker as a non-flat surface which does not have the vertical axis as axis of symmetry, this ensures that a gap always exists between the bottom surface of the beaker and the bottom part of the blender bar (i.e. the cage). As a result, the suction force is highly reduced, which improves the blending efficiency because the ingredients can continuously flow into the cage of the blender bar.

Detailed explanations and other aspects of the invention will be given below.

### BRIEF DESCRIPTION OF THE DRAWINGS

Particular aspects of the invention will now be explained with reference to the embodiments described hereinafter and considered in connection with the accompanying drawings, in which identical parts or sub-steps are designated in the same manner:
Fig.1 depicts a beaker according to the invention for a blender equipped with a blender bar,
Fig.2A and Fig.2B illustrate details of the beaker according to the invention,
Fig.3A-3B illustrate details on the characteristics of the bottom surface of a beaker not according to the invention,
Fig.4A-4B illustrate details on the characteristics of the bottom surface of a beaker according to an embodiment of the invention,
Fig.5A-5B illustrate details on the characteristics of the bottom surface of a beaker not according to the invention,
Fig.6A-6B illustrate details on the characteristics of the bottom surface of a beaker according to an embodiment of the invention,
Fig.7A-7B illustrate details on the characteristics of the bottom surface of a beaker according to an embodiment of the invention,
Fig.8A-8B illustrate details on the characteristics of the bottom surface of a beaker according to an embodiment of the invention.

### DETAILED DESCRIPTION OF THE INVENTION

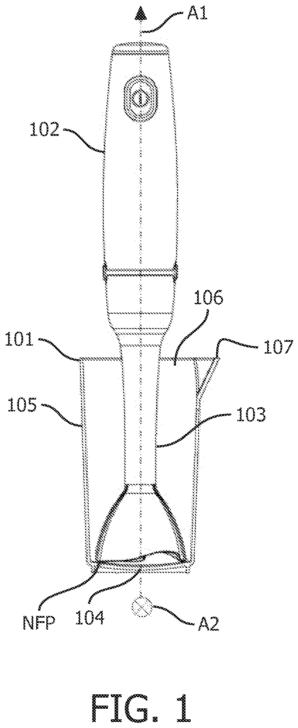

Fig.1 depicts a beaker 101 according to the invention for a blender 102 equipped with a blender bar 103. The beaker comprises a bottom surface 104, and a side wall 105 extending upwardly along a vertical axis A1 from said bottom surface.

The bottom surface 104 is defined as a portion P1 of a surface S1 generated by the translation of a two-dimensional non-flat pattern NFP along an axis A2 perpendicular to said vertical axis A1.

The side wall 105 forms an opening 106 at its upper part for receiving the blender bar 103.

The beaker 101 advantageously comprises a spout 107.

The upper part of the blender 102 corresponds to a main unit incorporating an electrical motor (not shown).

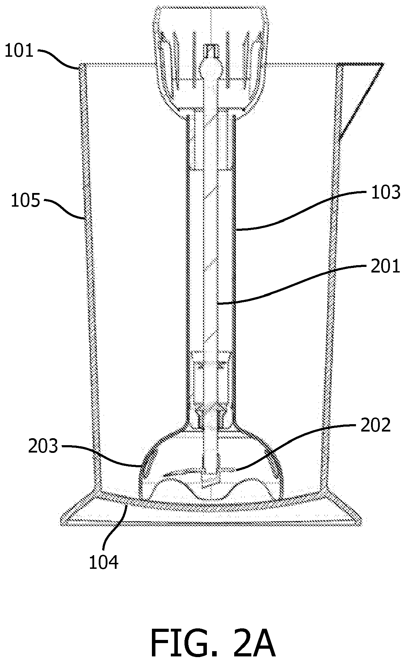

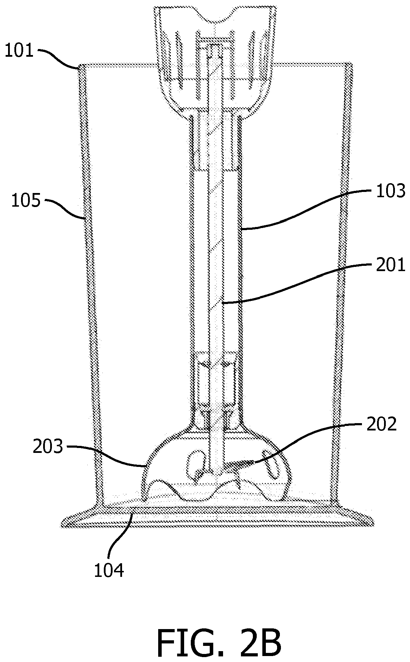

Fig.2A and Fig.2B illustrate details of the beaker according to the invention and the lower part of blender 102. The lower part of blender 102 corresponds to the blender bar 103. Fig.2A is a cross-section view in a plan perpendicular to axis A2, while Fig.2B is a cross-section view in a plan parallel to the plan formed by axis A1 and axis A2. The blender bar is equipped with a rotation bar 201 connected at one end to the electrical motor of the main unit, and a blade 202 connected at the other end. The blade 202 are covered by a cage 203 fixed to the blender bar.

The cross-section of side wall 105 may be of any shapes, but preferably are circular or elliptical.

The side wall 105 may extend vertically along axis A1, but preferably with an increasing diameter starting from the bottom surface 104, as illustrated.

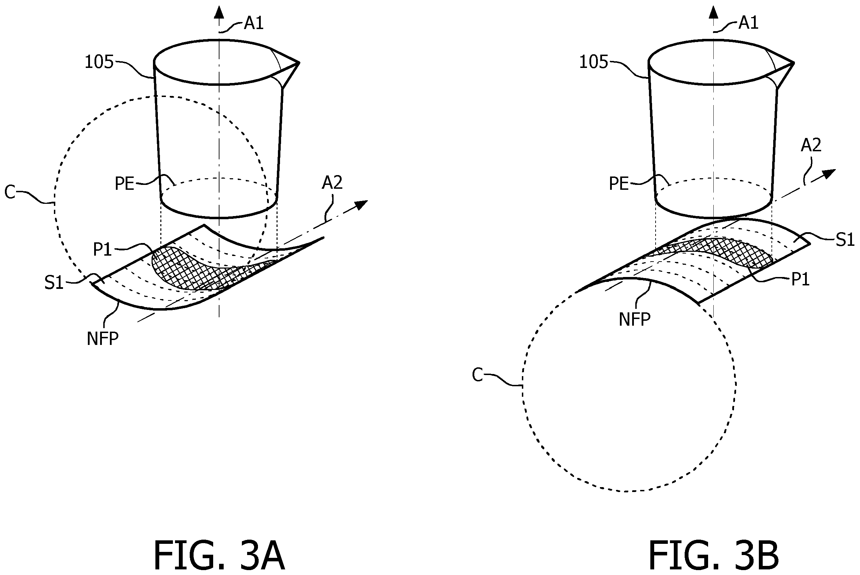

Fig.3A illustrates details on the characteristics of the bottom surface 104, not according to the invention. In this example, the bottom surface 104 is defined as a portion PI of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this example, the two-dimensional non-flat pattern NFP is a portion of a circle C comprising a curvature extending downwardly in a direction opposite to the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

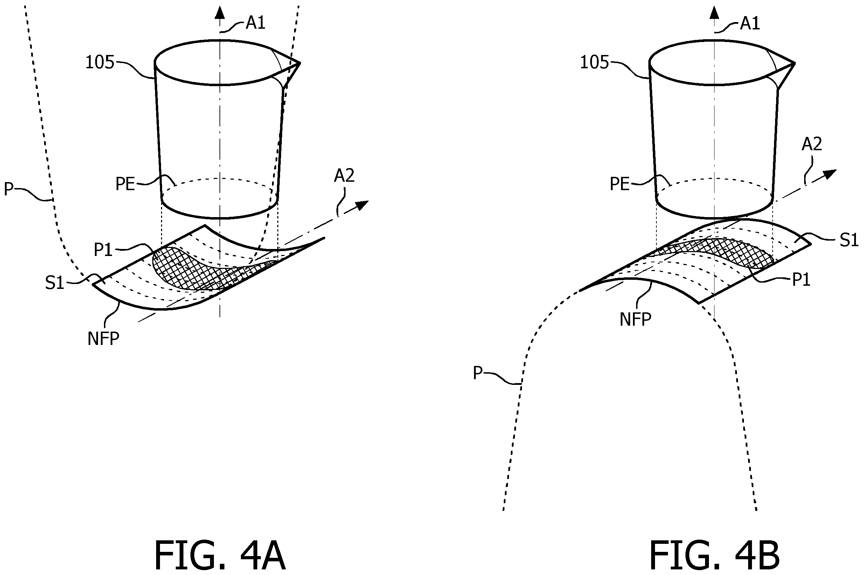

Fig.3B illustrates details on the characteristics of the bottom surface 104, not according to the invention. In this example, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this example, the two-dimensional non-flat pattern NFP is a portion of a circle C comprising a curvature extending upwardly in direction of the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE. Fig.4A illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a parabola P comprising a curvature extending downwardly in a direction opposite to the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

Fig.4B illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a parabola P comprising a curvature extending upwardly in direction of the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

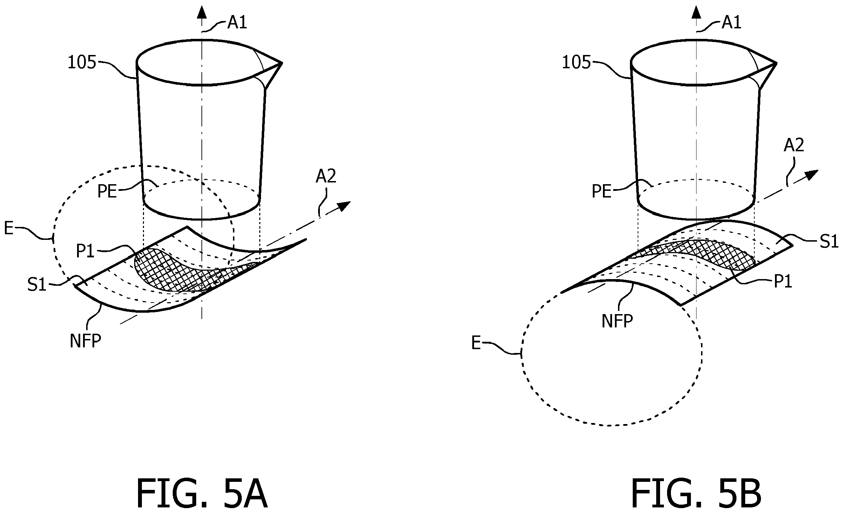

Fig.5A illustrates details on the characteristics of the bottom surface 104, not according to the invention. In this example, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this example, the two-dimensional non-flat pattern NFP is a portion of an ellipse E comprising a curvature extending downwardly in a direction opposite to the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

Fig.5B illustrates details on the characteristics of the bottom surface 104, not according to the invention. In this example, the bottom surface 104 is defined as a portion PI of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this example, the two-dimensional non-flat pattern NFP is a portion of an ellipse E comprising a curvature extending upwardly in direction of the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

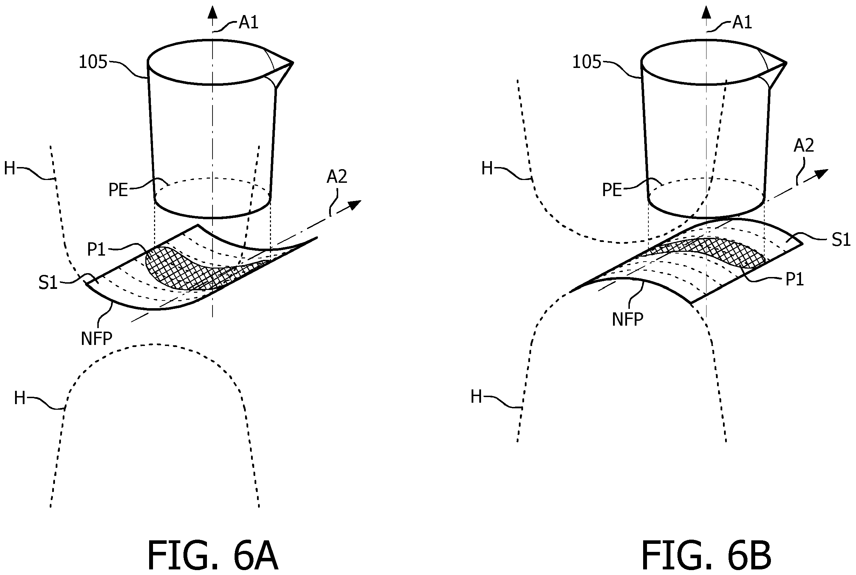

Fig.6A illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a hyperbola branch H comprising a curvature extending downwardly in a direction opposite to the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

Fig.6B illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a hyperbola branch H comprising a curvature extending upwardly in direction of the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

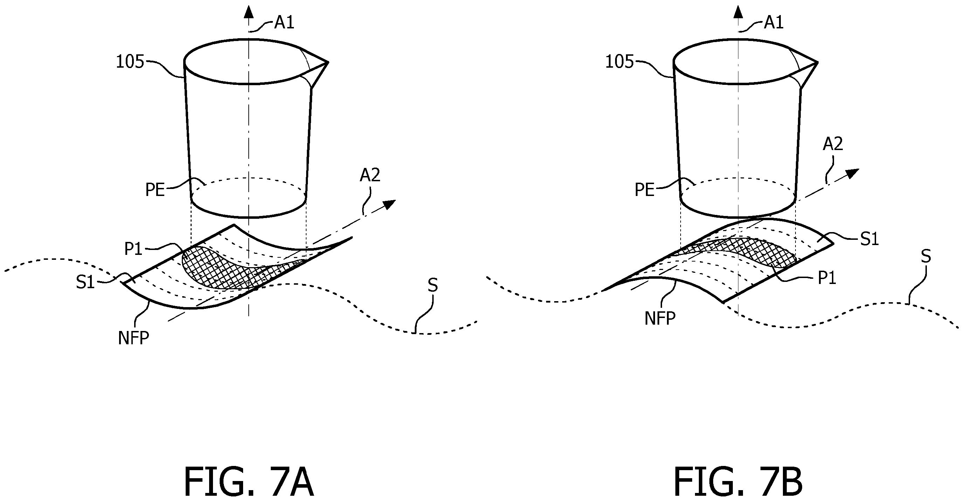

Fig.7A illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a sinusoid S comprising a curvature extending downwardly in a direction opposite to the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

Fig.7B illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a sinusoid S comprising a curvature extending upwardly in direction of the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

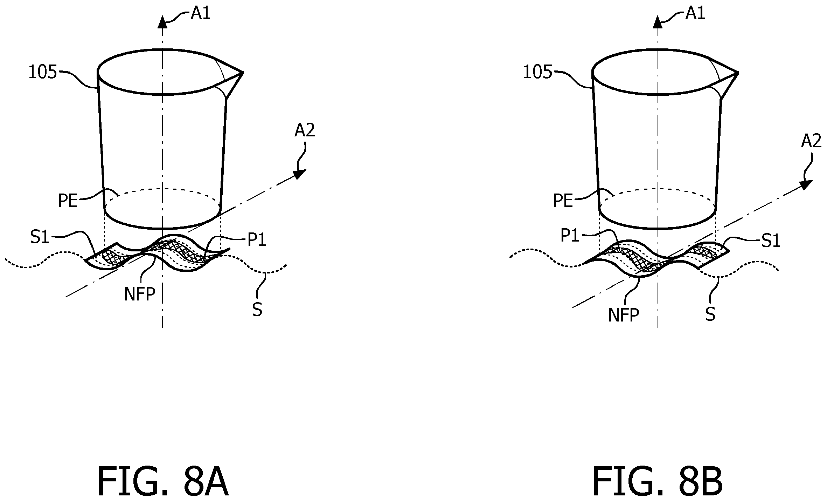

Fig.8A illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a sinusoid S, which comprises at least two half periods of the sinusoid S. For the sake of understanding, only three half periods are illustrated, with the central half period extending downwardly in a direction opposite to the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

Fig.8B illustrates details on the characteristics of the bottom surface 104, according to an embodiment of the invention. In this embodiment, the bottom surface 104 is defined as a portion P1 of a surface S1 generated by the translation of a two-dimensional non-flat pattern NFP along axis A2, axis A2 being perpendicular to the vertical axis A1. This translation is illustrated by a plurality of two-dimensional non-flat patterns NFP represented in dotted lines and repeating along axis A2. In this embodiment, the two-dimensional non-flat pattern NFP is a portion of a sinusoid S, which comprises at least two half periods of the sinusoid S. For the sake of understanding, only three half periods are illustrated, with the central half period extending upwardly in direction of the vertical axis A1. This two-dimensional non-flat pattern NFP is in a plan perpendicular to axis A2. On the surface S1, the portion P1, represented with a meshed pattern, is delimited by the vertical projection along axis A1 of the external perimeter PE of the bottom surface 104 of the beaker. In other words, the portion P1 is the area delimited by the intersection of surface S1 with the external perimeter PE.

## Claims

1. A beaker (101) for a blender (102) equipped with a blender bar (103) equipped with a rotation bar (201) connecting to a blade (202) covered by a cage (203), said beaker (101) comprising a bottom surface (104), a side wall (105) extending upwardly along a vertical axis (A1) from said bottom surface, said side wall (105) forming an opening (106) at its upper part for receiving said blender bar (103), **characterized in that** said bottom surface (104) is defined as a portion (PI) of a surface (S1) generated by the translation of a two-dimensional non-flat pattern (NFP) along an axis (A2) perpendicular to said vertical axis (A1), so as to always form a gap between the bottom surface (104) of the beaker (101) and the cage (203) of the blender bar (103) during blending; wherein said two-dimensional non-flat pattern (NFP) is a portion of a parabola (P), or a portion of a hyperbola branch (H) or a portion of a sinusoid (S).

2. A beaker as claimed in claim 1 wherein said two-dimensional non-flat pattern (NFP) comprising a curvature extending downwardly in a direction opposite to said vertical axis (A1).

3. A beaker as claimed in claim 1 wherein said two-dimensional non-flat pattern (NFP) comprising a curvature extending upwardly in direction of said vertical axis (A1).

## Patentansprüche

1. Becher (101) für einen Mixer (102), der mit einem Mixerstab (103) ausgerüstet ist, der mit einem Drehstab (201) ausgerüstet ist, der mit einer Klinge (202) verbunden ist, die von einem Käfig (203) abgedeckt ist, wobei der Becher (101) eine untere Fläche (104), eine Seitenwand (105), die sich von der unteren Fläche entlang einer vertikalen Achse (A1) nach oben erstreckt, umfasst, wobei die Seitenwand (105) an ihrem oberen Teil eine Öffnung (106) zum Aufnehmen des Mixerstabs (103) bildet, **dadurch gekennzeichnet, dass** die untere Fläche (104) als Abschnitt (P1) einer Fläche (S1) definiert ist, die durch die Translation eines zweidimensionalen nichtebenen Musters (Non-Flat Pattern, NFP) entlang einer Achse (A2) erzeugt wird, die senkrecht zur vertikalen Achse (A1) steht, um während des Mixens zwischen der unteren Fläche (104) des Bechers (101) und dem Käfig (203) des Mixerstabs (103) immer einen Spalt zu bilden; wobei das zweidimensionale nichtebene Muster (NFP) ein Abschnitt einer Parabel (P) oder ein Abschnitt eines Hyperbelastes (H) oder ein Abschnitt einer Sinuskurve (S) ist.

2. Becher nach Anspruch 1, wobei das zweidimensionale nichtebene Muster (NFP) eine Krümmung umfassend, die sich in eine Richtung nach unten erstreckt, die der vertikalen Achse (A1) entgegengesetzt ist.

3. Becher nach Anspruch 1, wobei das zweidimensionale nichtebene Muster (NFP) eine Krümmung umfassend, die sich in eine Richtung der vertikalen Achse (A1) nach oben erstreckt.

## Revendications

1. Gobelet (101) pour un mélangeur (102) équipé d'une barre de mélangeur (103) équipée d'une barre de rotation (201) se raccordant à une lame (202) recouverte par une cage (203), ledit gobelet (101) présentant une surface inférieure (104), une paroi latérale (105) s'étendant vers le haut le long d'un axe vertical (A1) à partir de ladite surface inférieure, ladite paroi latérale (105) formant une ouverture (106) au niveau de sa partie supérieure pour recevoir ladite barre de mélangeur (103), **caractérisé en ce que** ladite surface inférieure (104) est définie comme une partie (P1) d'une surface (S1) générée par la translation d'un motif non plat bidimensionnel (NFP) le long d'un axe (A2) perpendiculaire audit axe vertical (A1), de manière à toujours former un espace entre la surface inférieure (104) du gobelet (101) et la cage (203) de la barre de mélangeur (103) pendant le mélange ; dans lequel ledit motif non plat bidimensionnel (NFP) est une partie d'une parabole (P), ou une partie d'une branche d'hyperbole (H) ou une partie d'une sinusoïde (S).

2. Gobelet selon la revendication 1 dans lequel ledit motif non plat bidimensionnel (NFP) présente une courbure s'étendant vers le bas dans une direction opposée audit axe vertical (A1).

3. Gobelet selon la revendication 1 dans lequel ledit motif non plat bidimensionnel (NFP) présente une courbure s'étendant vers le haut dans la direction dudit axe vertical (A1).
